# EUROPEAN PATENT APPLICATION

(11) **EP 2 444 937 A2**
(43) Date of publication of application: **25.04.2012**
(21) Application number: 11185717.3
(22) Date of filing: 19.10.2011
(51) Int. Cl.: G06T 11/20

(54) **Smart plot methodology**

(30) Priority: 25.10.2010 US 911076
(71) Applicant: General Electric Company, Schenectady, NY 12345 (US)
(72) Inventor: Williams, Scott Terrell, Minden, NV Nevada 89423 (US)
(74) Representative: Bedford, Grant Richard

(57) **Abstract**

The present subject matter relates to a method and system for generating data plots (800, 900) illustrating aspects relating to relationships (412, 414, 416) among entities. Plot definitions are established defining relationships among plural entities where the definitions include data paths (600) identifying data locations. Data may be provided to the data locations either manually or automatically and various selectable diagnostic plots may be generated.

## Description

The present subject matter relates generally to modeling, and, more specifically, to automation of plot sessions.

Plot sessions have previously been conducted to produce a group of plots that may have been hand built using data points for a specific piece of equipment. Problems associated with such plot sessions relate to the time it takes for creation of custom plots and management of the produced plots. While providing great value to an individual user, the time to set up and maintain such plot sessions is quite high.

While the plots sessions are valuable, they are limited to a single configured asset. It would be advantageous, therefore, to provide a plot creation method that removes, or at least significantly reduces, the cost of manually configuring plot sets for each configured equipment.

In view of these known problems involved with prior efforts to provide plot sets for specifically provided equipment, there remains a need to provide simple methods that reduce the time required to produce customized equipment plot sets.

Various aspects and advantages of the invention will be set forth in part in the following description, or may be clear from the description, or may be learned through practice of the invention.

The present subject matter relates to a method for generating data plots including establishing a plurality of plot definitions where each definition is associated with an entity and each definition identifying a data path including at least one data location. The method further provides for establishing at least one relationship between at least two entities and providing data within the data path corresponding to the at least one relationship. Plots are generated by first selecting at least one plot type to be generated and then sequentially pulling data from the at least one data location identified by the data path to plot data points until all points for the selected plot types have been generated.

In some embodiments, the method data is placed into selected data locations manually while in other embodiments the data are placed automatically. In some embodiments, the data may be generated from a sensor associated with an entity.

In further embodiments, relationships may be established among at least three entities and at least two plots types, possibly of different types, may be generated. In particular embodiments, the plots may be trend or bar graph plots and may correspond to one or more of a diagnostic plot, a start up plot, a shut down plot, a performance analysis plot, and a thermographic analysis plot.

The present subject matter also relates to a system for generating data plots, comprising means for storing a plurality of plot definitions each associated with an entity, each definition identifying a data path including at least one data location, means for storing data defining at least one relationship between at least two entities, means for selecting at least one plot type to be generated, means for sequentially pulling data from the at least one data location identified by the data path, and means for plotting data points until all points for selected plot types have been generated.

In certain embodiments of the system, data may be entered by way of a manual device such as a keyboard or using a mouse or other input device to select from presentation choices offered to a user by way of a display screen.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention. In the drawings:
Fig. 1 provides a representation of a model illustrating four entities, relationships there between, and, data points associated with entity properties;
Figs. 2 ― 5 are tables illustrating representative entity properties for the four entities illustrated in association with the model illustrated in Fig. 1;
Fig. 6 is an example Smart Plot definition in accordance with present technology;
Fig. 7 is a flow chart of exemplary code for rendering a Smart Plot;
Fig. 8 is an exemplary Smart Plot graph constructed in accordance with present technology to illustrate trends over time for selected entities; and
Fig. 9 is an exemplary Smart Plot bar graph in accordance with present technology.

Repeat use of reference characters throughout the present specification and appended drawings is intended to represent same or analogous features or elements of the invention.

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents

Smart Plots, in accordance with the present disclosure, provide a method to conveniently define and automatically produce sets of diagnostic data plots for similar machinery types. Through the use of the present methodology, many different Smart Plots can be automatically produced for similar equipment, sometimes described herein as represented as "entities," based on different types of data that may be analyzed at minimum additional cost both in terms of time and effort. The various plots may correspond to, for example, start up/ shut down plots, performance analysis plots, and thermographic analysis plots all showing different diagnostic plots views for the same physical machine. Each diagnostic plot set can be created for physically different, yet similar machines or entities.

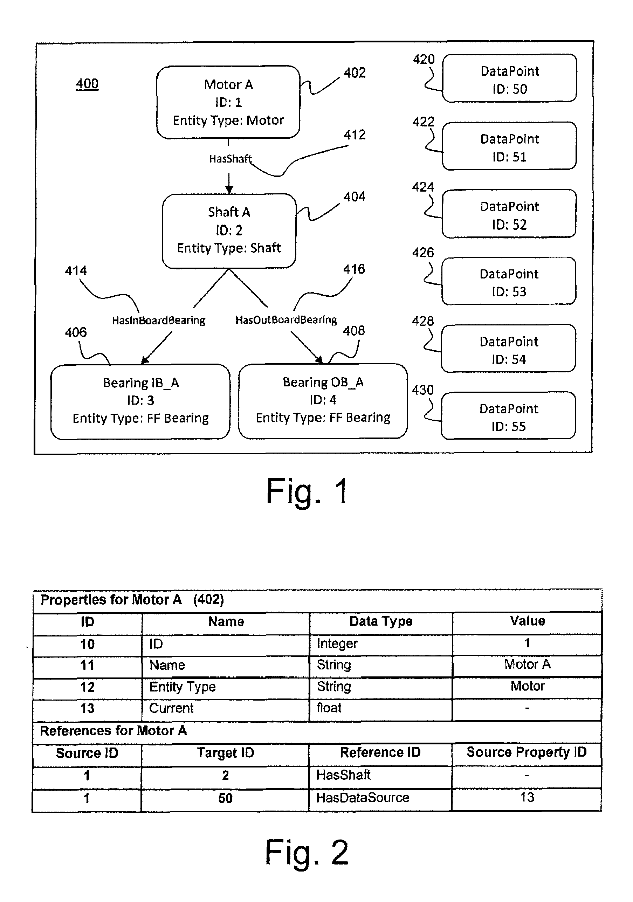

Entities, as described herein, correspond to building blocks to model things. In one example as illustrated in Fig. 1, a model 400 of an exemplary item may be created using four entity types corresponding to a motor 402, a shaft 404, an inboard bearing 406, and an outboard bearing 408. Exemplary relationships among these entities 402, 404, 406, 408 may correspond to "HasShaft" 412, "HasInBoardBearing" 414, and "HasOutBoardBearing" 416. These references connect and give meaning to the relationships among the four entities 402, 404, 406, 408.

Further, entities have properties that define information about itself. For example, an ID property may be used to provide a unique identifier to distinguish among the entities in the system. In an exemplary configuration of the present subject matter, six data points 420, 422, 424, 426, 428, 430 may be defined in the system. Data points 420, 422, 424, 426, 428, 430 may provide data from sensors or other data sources including manually entered data and make the data available to, for example, a processor controlled by software that produces Smart Plots in accordance with the present technology as described herein.

With reference to the charts illustrated in Figs. 2-5, it will be seen that each entity 402, 404, 406, 408 has a set of properties. Certain of the properties obtain their values from certain data sources such as represented by one or more of data points 420, 422, 424, 426, 428, 430. In such an instance, in order to link a property of an entity to a data source a "HasDataSource" reference may be added with the source property ID designating the property linked by the reference. Other properties may correspond to static or fixed values that may be stored along with model 400 in a data storage device such as a computer memory, a computer readable medium, a random access memory (RAM), or other medium capable of data storage and from which data may be retrieved for processing by such as a personal computer, a microprocessor or other devices.

In an exemplary embodiment, it will be seen from Fig. 2 that, for entity 402 corresponding to a motor entity type, an ID number "10" may be assigned which, as illustrated in Fig. 2, is understood to be an integer number having a value of "1." Similarly, ID number "11" designates that the entity name is assigned a value of "Motor A" and that the name corresponds to string type data while the Entity Type is designated to corresponds to string type data corresponding to a "Motor."

The chart of Fig. 2 also illustrates references for Motor A entity 402 indicating that the entity 402 has a shaft and a Data Source. In this example, the data source is identified with a Target ID of "50" that represents Data Point ID: 50 illustrated as Data Point 420 in Fig. 1. In this instance, the data source for Data Point 420 may correspond to a floating point current reading from a sensor (not separately illustrated) configured to provide a motor current reading for Motor A, that is, entity 402, which current reading is identified as ID number 13 in Fig. 1. It should be appreciated that a manual entry may be made as opposed to an actual reading and that such manual entry may reflect an actual current reading from an operating motor or a theoretical value for which a graph is to be generated.

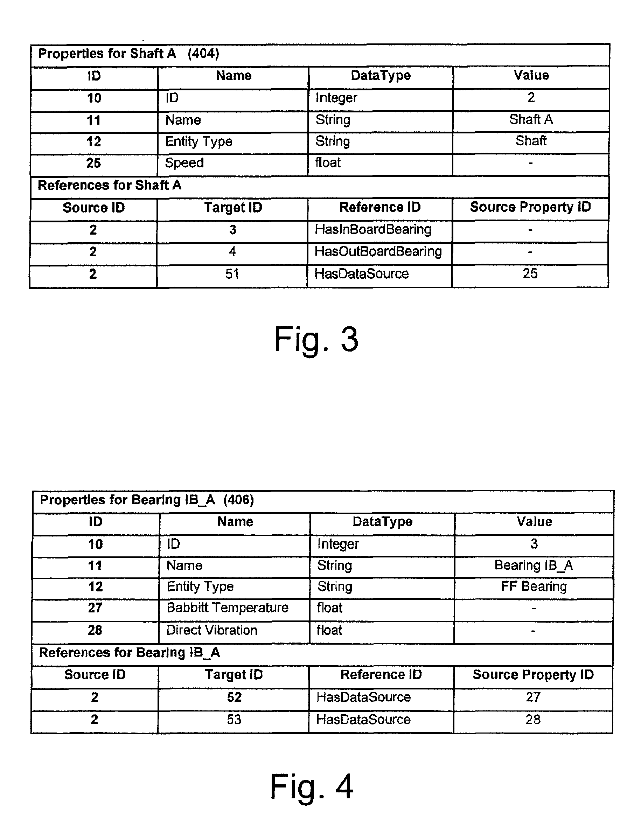

With reference to Fig. 3, it will be noticed that information regarding entity 404 representing a shaft type entity is presented and that such information is similar to that of Fig. 2 relating to entity 402 representing a motor type entity. More specifically, entity type 404 is representatively assigned an integer data type having a value of "2," a string data type name corresponding to "Shaft A," and an entity type in the form of a string data type identifying the entity as a "shaft."

In addition, references for Shaft A illustrated in Fig. 3 establish that Shaft A has both inboard and outboard bearings and a data source identified as target ID 51 associated with the shaft. In this instance, data source 422 of Fig. 1 corresponds to target ID 51. This fact is also noted in Fig. 3 via the identification for Reference ID corresponding to "HasDataSource."

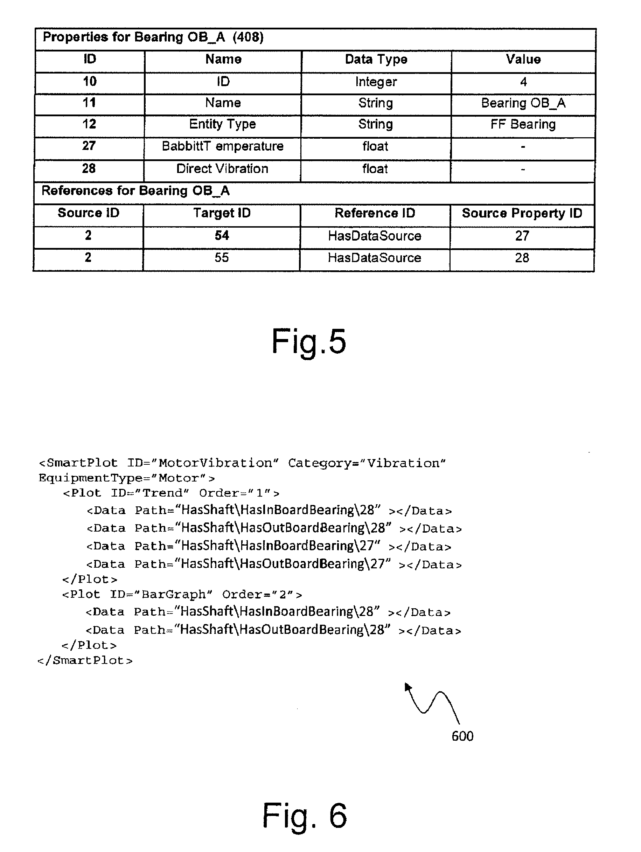

With reference to Figs. 4 and 5, it will be appreciated that references similar to those illustrated in Figs. 2 and 3 but relating to inner bearing entity 406 (Fig. 4) and outer bearing entity 408 (Fig. 5) have been provided.

More specifically, Fig. 4 corresponds to a chart illustrating information regarding entity 406 representing an inner bearing entity. In this instance, entity 406 is representatively assigned an integer data type having a value of "3," a string data type name corresponding to "Bearing IB_A," and an entity type in the form of a string data type identifying the entity as "FF Bearing." In addition, the chart of Fig. 4 indicates that there are two "HasDataSource" identifications corresponding to Target IDs ID: 52 and ID: 53 illustrated as Data Points 424 and 426, respectively, in Fig. 1.

Finally, Figure 5 provides similar information regarding entity 408 representing an outer bearing. In this instance, entity 408 is representatively assigned an integer data type having a value of "4," a string data type name corresponding to "Bearing OB_A," and an entity type in the form of a string data type identifying the entity as "FF Bearing." In addition, the chart of Fig. 4 indicates that there are two "HasDataSource" identifications corresponding to Target IDs ID: 54 and ID: 55 illustrated as Data Points 428 and 430, respectively, in Fig. 1.

Referring to Fig. 6 there is illustrated an example of Smart Plot definitions 600 in accordance with present technology. It will be seen that Smart Plot definitions 600 may be tied to the various entity types illustrated in Fig. 1. Further, it should be appreciated that Smart Plot definitions 600 contain the plots and data path links for the plots. All data paths are configured from the top level entity down. In this manner, for example, for entities 402, 404, 406, 408 illustrated in Fig. 1, a Smart Plot definition can store a data reference from a Motor entity to, for example, the Direct Vibration on the inboard bearing using the notation "HasShaft\HasInBoardBearing\28." Individual references and items of the reference are separated with a backslash. The last item of the reference, the "28" in this instance, is a reference to the property of the entity for the plot. In this case the Direct Vibration illustrated as property ID: 28 in Fig. 4 includes a "HasDataSource" reference pointing to DataPoint 53. At run time the Smart Plot code takes the "HasShaft\HasInBoardBearing\28" for Motor A in Fig. 1 and determines that the data stored in DataPoint 53 is to be sent to the plot for rendering.

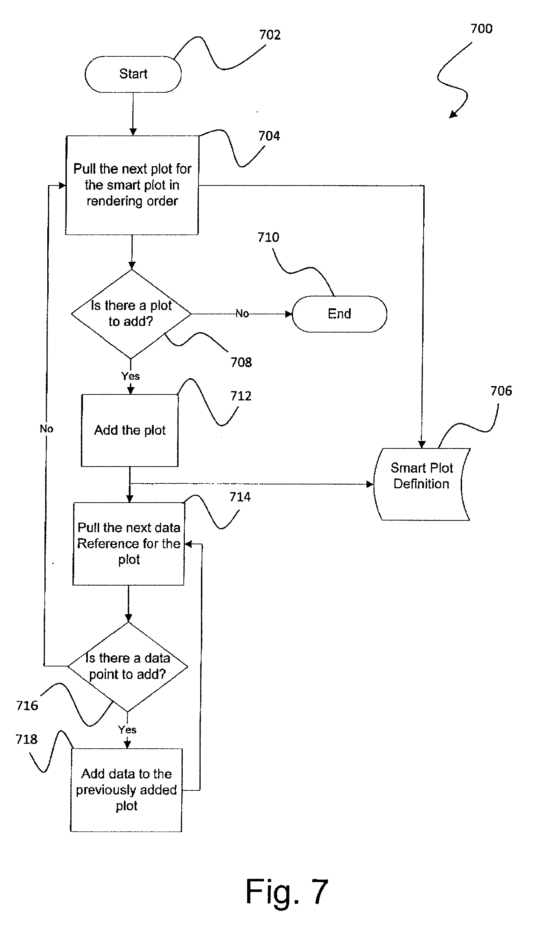

Referring to Fig. 7, there is illustrated a flow chart 700 of exemplary steps for rendering a Smart Plot in accordance with present technology. As previously noted, various properties associated with entities as described herein may be stored in various computer readable mediums. Further, these steps described in flow chart 700 may be implemented in software or hardware using, for example without limitation, a personal computer, a microprocessor or other known systems and devices to implement the presently disclosed methods. As illustrated, the Smart Plot process takes the Smart Plot definitions 600 as exemplarily illustrated in Fig. 6 and creates, for example, two plots based on the flow chart. Based on display preferences an "Order" value for the plot is established to define the order and layout position for each of the plots. The selection of these choices is made in an initialization or start step 702 and may in some embodiments be performed by manual entry of preferences by way of a keyboard associated with a personal computer, or by other appropriate data entry means including, for example without limitation, selecting options offered by a software implementation and displayed on a computer display screen for click selection using a mouse or other input device.

At step 704 information for the "next plot" is pulled from the Smart Plot Definitions at 706. If the "next plot" is actually the first plot based on the order established in the initialization step 702, then the response from step 708 indicates that there is a plot to be added and the process advances to step 712 to add the plot.

The process continues at step 714 to pull additional data references and to determine at step 716 if there are further data references to add to the plot. If there is a data point to be added, the process continues to step 718 to add the data point and then loops back to step 714 to determine if there are further data references to be pulled. If there are further data references and data points to be added, the process repeats the loop until all point are pulled.

When there are no further points to be pulled, the process loops back to determine if there is another plot to render. If so, the process repeats until there are no further plots to render where the process ends at step 710.

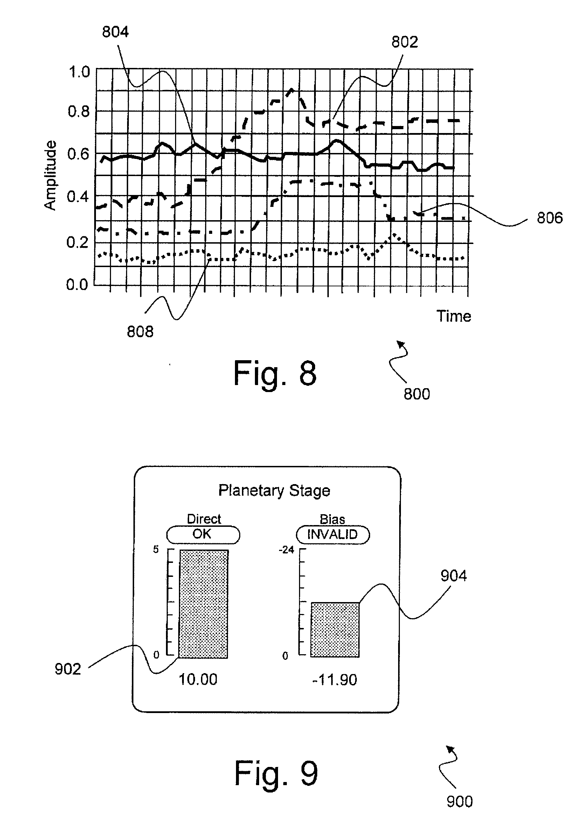

With reference to Figs. 8 and 9, there are illustrated example graphs created using the present technology. A "Trend" plot 800 as illustrated in Fig. 8 may be chosen to be produced first as described with reference to Fig. 7 followed by a "Bar Graph" as illustrated in Fig. 9. The graphs illustrated in Figs. 8 and 9 may be produced by way of a printer or displayed on a computer display device. In the first position, a "Trend" plot 800 as illustrated in Fig. 8 may be created with data from four curves from DataPoint IDs 52, 53, 54 and 55 noted as data points 424, 426, 428, and 430, respectively on Fig. 1. These graphs may then be represented by lines 802, 804, 806, 808 on Trend plot 800.

It should be appreciated that plot 800 here illustrated corresponds to a general representation of graphs that may be created using the present technology and that the particular scales illustrated are exemplary rather than specific to a particular aspect of the present subject matter. In the present example, the Time scale may correspond to equal divisions representing 24 hours of monitored or modeled operation of an entity. Other time divisions could, of course, be provided. The amplitude scale illustrated is representative of various scales that may be provided for the graph which may include a variety of measurement indications including, without limitation, voltage, temperature, pressure, etc.

With reference to Fig. 9, in the second position of the Smart Plots is a "Bar Graph" plot 900 created with data from two DataPoints 53 and 55 and illustrated as bar graph elements 902, 904. Again as represented bar graph 900 is illustrated as representative of the graphs producible based on the present technology and not representative of any particular entity. In general, it will be noticed from Fig. 9 that bar graph 900 may also provide additional indicia such as an indication above graph element that the displayed reading is a "Direct" reading, that the displayed value of "10.00" is "OK" for the displayed value. On the other hand, element 904 of bar graph 900 indicates that the element represents a value of "-11.90," is representative of a "Bias" reading but that the value is "Invalid." Such determinations of "OK" or "Invalid" may be made by comparison of the DataPoints being plotted against stored predetermined values for the entity being represented. Additional information such as the indication "Planetary Stage" may be specified based on association of specific data plotted with properties of the entity for which the graph is to be generated.

An embodiment of the present invention can also be embodied in the form of computer program code, for example, whether stored in a storage medium, loaded into and/or executed by a computer, or transmitted over some transmission medium, such as over electrical wiring or cabling, through fiber optics, or via electromagnetic radiation, wherein, when the computer program code is loaded into and executed by a computer, the computer becomes an apparatus for practicing the invention. When implemented on a general-purpose microprocessor, the computer program code segments configure the microprocessor to create specific logic circuits. One technical effect of the executable code is to facilitate prediction and optimization of modeled devices and systems.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A method for generating data plots, comprising:
establishing a plurality of plot definitions (706), each definition associated with an entity, each definition identifying a data path including at least one data location;
establishing at least one relationship (412, 414, 416) between at least two entities;
providing data within the data path (600) corresponding to the at least one relationship;
selecting at least one plot type to be generated (704);
sequentially pulling data (714) from the at least one data location identified by the data path; and
plotting data points (712) until all points for the selected plot types have been generated.

2. The method of claim 1, where providing data comprises manually entering data into a selected data location.

3. The method of any preceding claim, where providing data comprises automatically entering data into a selected data location.

4. The method of claim 3, wherein automatically entering data comprising entering data from a sensor associated with an entity.

5. The method of any preceding claim, further comprising establishing at least two relationships among at least three entities.

6. The method of any preceding claim, wherein selecting comprises selecting at least two plot types.

7. The method of any preceding claim, wherein selecting comprises selecting at least two different plot types (800, 900).

8. The method of any preceding claim, wherein selecting comprises selecting a trend plot.

9. The method of any preceding claim, further comprising:
selecting at least one additional plot type: and
selecting an order for plotting between the at least one plot and the at least one additional plot.

10. The method of any preceding claim, wherein selecting at least one plot type comprises selecting at least one of a diagnostic plot, a start up plot, a shut down plot, a performance analysis plot, and a thermographic analysis plot.

11. A system for generating data plots, comprising:
means (400) for storing a plurality of plot definitions each associated with an entity, each definition identifying a data path including at least one data location;
means (400) for storing data defining at least one relationship between at least two entities;
means for selecting at least one plot type to be generated;
means (700) for sequentially pulling data from the at least one data location identified by the data path; and
means (700) for plotting data points until all points for selected plot types have been generated.

12. The system of claim 11, wherein the means for storing data comprises a means to manually enter data into a selected data location.

13. The system of claim 11 or claim 12, where providing data comprises automatically entering data into a selected data location.

14. The system of claim 13, wherein the means for storing data comprises a sensor associated with an entity to automatically enter data into a selected data location.

15. The system of any of claims 11 to 14, further comprising:
means for selecting at least one additional plot type; and
means for selecting an order for plotting between the at least one plot and the at least one additional plot.
